# FASCICULE DE BREVET EUROPEEN

(11) **EP 1 840 364 B1**
(45) Date de publication et mention de la délivrance du brevet: **07.05.2014**
(21) Numéro de dépôt: 07290289.3
(22) Date de dépôt: 06.03.2007
(51) Int. Cl.: F02K 3/10

(54) **Chambre de post-combustion**
Nachverbrennungskammer
Post-combustion chamber

(30) Priorité: 30.03.2006 FR 0602740
(43) Date de publication de la demande: 03.10.2007
(73) Titulaire: SNECMA, 75015 Paris (FR)
(72) Inventeur: Bunel, Jacques Marcel, 94260 Fresnes (FR); Page, Alain Pierre, 91230 Montgeron (FR); Roche, Jacques, André, Michel, 87160 Saint Sulpice les Feuilles (FR); Vuillemenot, Yann, Francois, Jean-Claude, 75011 Paris (FR)
(74) Mandataire: Paris, Fabienne

(56) Documents cités:
- EP-A- 0 550 126
- EP-A- 1 491 752
- EP-A- 1 593 911
- EP-A1- 0 328 813
- US-A- 5 396 763
- US-A- 5 813 221

## Description

La présente invention concerne un dispositif de montage d'une paroi de séparation des flux primaire et secondaire dans une chambre de post-combustion d'un turboréacteur à double flux.

Cette paroi est agencée à l'intérieur d'un carter diffuseur cylindrique du turboréacteur et délimite avec celui-ci une veine annulaire d'écoulement du flux secondaire qui est destiné à se mélanger partiellement au flux primaire, s'écoulant à l'intérieur de la paroi, à l'aval de la chambre de post-combustion.

Les documents EP-A-1 593 911, EP-A-1 491 752, US-A-5 813 221 et US-A-5 396 763 décrivent chacun une chambre de postcombustion comprenant une paroi de séparation des flux primaire et secondaire.

La paroi de séparation est fixée à son extrémité amont sur le carter diffuseur par l'intermédiaire de broches cylindriques qui s'étendent radialement dans le flux secondaire, et dont l'extrémité externe est fixée au carter diffuseur et l'extrémité interne est montée à étanchéité dans une cheminée correspondante de la paroi.

La paroi comporte à son extrémité aval des échancrures orientées vers l'aval et traversées par des bras accroche-flammes qui s'étendent radialement depuis le carter diffuseur jusque dans le flux primaire. Chaque bras s'étend à distance du bord de l'échancrure correspondante de la paroi et définit avec ce bord une section de fuite de l'air du flux secondaire vers le flux primaire.

La partie aval de cette paroi est ainsi montée en porte-à-faux et peut se dilater librement sous l'effet de l'élévation de température pendant le fonctionnement du turboréacteur.

Toutefois, la pression du flux secondaire est supérieure à celle du flux primaire provenant de la turbine du turboréacteur, ce qui induit des efforts importants sur la partie aval de la paroi de séparation, et se traduit par des déformations locales de cette partie aval vers l'axe du turboréacteur et par une augmentation de la section de fuite précitée, diminuant ainsi les performances du turboréacteur.

Une solution connue à ce problème consiste à rigidifier la paroi de séparation en augmentant son épaisseur et en formant des raidisseurs dans sa partie d'extrémité aval. Cependant, cette solution n'est pas satisfaisante car elle est complexe et coûteuse à réaliser, et entraîne une augmentation de la masse de la paroi de séparation ce qui est un inconvénient dans l'industrie aéronautique.

L'invention a notamment pour but d'apporter une autre solution plus simple et plus économique à ce problème.

Elle propose à cet effet une chambre de post-combustion, selon la revendication 1, d'un turboréacteur à double flux, comprenant une paroi sensiblement cylindrique de séparation des flux primaire et secondaire, des moyens de fixation de l'extrémité amont de cette paroi sur un carter externe, et des moyens de support de l'extrémité aval de cette paroi, ces moyens de support étant prévus sur des bras accroche-flammes s'étendant radialement par rapport à l'axe de la chambre, telle que la paroi de séparation comprend des orifices ou des échancrures traversés par les bras accroche-flammes qui comportent chacun une collerette sensiblement radiale qui s'étend à l'intérieur de la paroi de séparation et forme une surface de support du bord d'un orifice ou d'une échancrure correspondante de la paroi de séparation, un rebord cylindrique sensiblement coaxial au bras étant formé sur la collerette et s'étendant radialement vers l'extérieur dans l'orifice ou l'échancrure de la paroi de séparation et le long du bord de l'orifice ou de l'échancrure, et en ce que l'extrémité aval de la paroi de séparation s'étend à l'intérieur d'une chemise cylindrique de protection thermique d'un canal de post-combustion et comprend des moyens d'appui radial sur cette chemise.

Selon l'invention, la partie aval de la paroi de séparation est supportée de façon positive par des éléments structuraux de la chambre, ce qui permet de transmettre les efforts de pression appliqués sur cette partie aval aux éléments structuraux et d'empêcher ses déformations vers l'intérieur en fonctionnement, tout en autorisant une libre dilatation thermique de la paroi par rapport aux éléments structuraux.

On peut ainsi réaliser des systèmes de post-combustion à taux d'extraction élevés, capables de supporter des efforts de pression importants de part et d'autre de la paroi de séparation.

Les moyens de support sont formés sur des bras accroche-flammes qui s'étendent radialement par rapport à l'axe de la chambre à travers des orifices ou des échancrures de la partie aval de la paroi. Chaque bras accroche-flammes comporte une collerette sensiblement radiale qui s'étend à l'intérieur de la paroi de séparation et forme une surface de support du bord d'un orifice ou d'une échancrure correspondante de la paroi de séparation. Cette collerette supporte les efforts de pression appliqués sur la paroi et s'étend, en fonctionnement, à une distance faible de la paroi de séparation de manière à réduire la section de fuite entre le bras accroche-flammes et la paroi.

La collerette peut être formée d'une seule pièce avec le bras accroche-flammes ou être rapportée sur le bras accroche-flammes.

Avantageusement, un rebord cylindrique sensiblement coaxial au bras est formé sur la collerette et s'étend radialement vers l'extérieur dans l'orifice ou l'échancrure de la paroi de séparation et le long du bord de l'orifice ou de l'échancrure.

Ce rebord cylindrique a préférentiellement une hauteur suffisante pour empêcher que des gaz chauds provenant du flux primaire et passant entre la collerette et la paroi, ne pénètrent dans des moyens de ventilation du bras accroche-flammes.

Dans un mode de réalisation préféré de l'invention, le rebord cylindrique s'étend le long du bord amont de la collerette et d'au moins une partie du bord aval de la collerette et est raccordé à des pattes latérales de fixation du bras accroche-flammes sur le carter.

La partie du bras qui s'étend radialement à l'intérieur de la collerette a avantageusement un profil aérodynamique pour garantir un écoulement sain et stable des gaz chauds s'écoulant autour du bras, c'est-à-dire sans décollement ni recirculation.

Dans le cas où la paroi de séparation s'étend au moins en partie à l'intérieur d'une chemise cylindrique de protection thermique d'un canal de post-combustion, l'extrémité aval de la paroi de séparation comprend des moyens d'appui radial sur cette chemise pour limiter les déformations de l'extrémité aval de la paroi vers l'extérieur.

Ces moyens d'appui radial sont par exemple formés par des pontets rapportés sur l'extrémité aval de la paroi de séparation.

Cela améliore notablement le comportement dynamique de la paroi de séparation dont les déplacements à son extrémité aval sont ainsi limités radialement vers l'intérieur et vers l'extérieur.

Dans un autre mode de réalisation de l'invention, la chambre de post-combustion comprend une réchauffe annulaire et la paroi de séparation est supportée par des pontets fixés sur les bords de fuite des anneaux accroche-flammes.

L'invention concerne également un turboréacteur à double flux, caractérisé en ce qu'il comprend une chambre de post-combustion telle que décrite ci-dessus.

L'invention concerne encore un bras accroche-flammes pour une chambre de post-combustion du type précité, comportant à une extrémité des pattes de fixation, caractérisé en ce qu'il comprend, au niveau de la base de ces pattes, une collerette externe sensiblement radiale formée avec un rebord cylindrique raccordé aux pattes de fixation du bras. Cette collerette peut être formée d'une pièce avec le bras ou être rapportée sur celui-ci.

L'invention sera mieux comprise et d'autres détails, caractéristiques et avantages de celle-ci apparaîtront à la lecture de la description suivante faite à titre d'exemple non limitatif et en référence aux dessins annexés dans lesquels :
- la figure 1 est une demi vue schématique en coupe axiale d'une chambre de post-combustion d'un turboréacteur à double flux ;
- la figure 2 est une vue schématique en perspective d'une paroi de séparation selon la technique antérieure ;
- la figure 3 est une vue schématique en perspective d'une paroi de séparation selon l'invention ;
- la figure 4 est une vue schématique de face d'un bras accroche-flammes selon l'invention, vu du côté aval ;
- les figures 5 à 7 sont des vues schématiques partielles en perspective du dispositif selon l'invention.

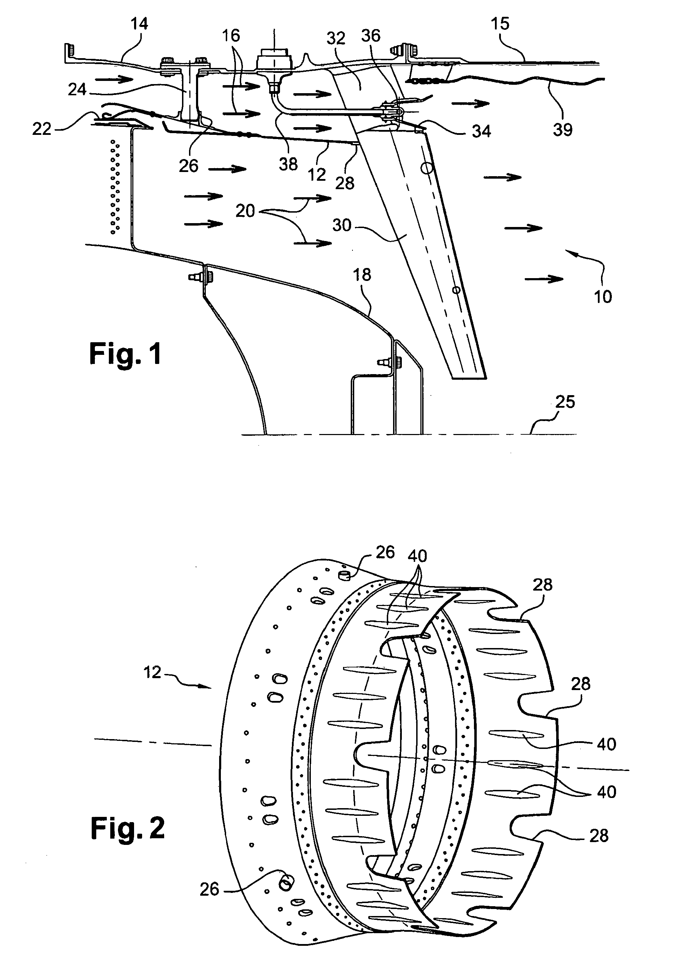

On se réfère d'abord à la figure 1 qui représente une chambre de post-combustion 10 d'un turboréacteur à double flux, située en aval de la turbine et en amont de la tuyère de sortie du turboréacteur.

La chambre de post-combustion 10 comprend une paroi sensiblement cylindrique 12 (appelée également « confluence ») de séparation des flux primaire et secondaire, qui est montée à l'intérieur d'un carter cylindrique externe d'échappement 14 et autour d'un cône d'échappement 18 du turboréacteur. La paroi 12 et le carter 14 délimitent entre eux une veine annulaire externe dans laquelle s'écoule le flux froid ou flux secondaire 16 du turboréacteur, généré par une soufflante à l'amont du turboréacteur et servant à augmenter la poussée et à ventiler des composants du turboréacteur. La paroi 12 délimite avec le cône d'échappement 18 une veine annulaire interne dans laquelle s'écoule le flux chaud ou flux primaire 20 du turboréacteur, qui est constitué par les gaz d'échappement de la chambre de combustion du turboréacteur. Le flux primaire 20 et le flux secondaire 16 sont mélangés partiellement en aval de la paroi 12 de manière à augmenter la poussée du turboréacteur.

La paroi 12 est engagée axialement à son extrémité amont sur une virole 22 d'un élément du turboréacteur situé à l'amont de la chambre de post-combustion 10, et est fixée sur le carter diffuseur 14 par l'intermédiaire de trois broches cylindriques 24 s'étendant radialement dans le flux secondaire 16 entre la paroi 12 et le carter 14 et régulièrement réparties autour de l'axe 25 du turboréacteur.

Chaque broche 24 comporte une extrémité radialement externe fixée par des boulons sur le carter 14 et une extrémité radialement interne montée à étanchéité dans une cheminée radiale externe 26 formée sur une partie d'extrémité amont de la paroi 12, comme cela est visible aux figures 1 et 2. Les extrémités internes des broches 24 sont légèrement évasées de façon à permettre un léger coulissement et rotulage des extrémités des broches dans les cheminées 26 de la paroi lors des dilatations thermiques différentielles entre la paroi et le carter.

La paroi 12 comporte également à son extrémité aval des échancrures 28 en U dont les ouvertures sont orientées vers l'aval et à travers lesquelles passent des bras accroche-flammes 30 qui s'étendent radialement par rapport à l'axe 25 du turboréacteur et de façon oblique par rapport à celui-ci, leur extrémité radialement externe étant fixée sur le carter diffuseur 14 et leur extrémité radialement interne étant décalée vers l'aval et située en aval du cône d'échappement 18. Les bras accroche-flammes 30 s'étendent avec jeu dans les échancrures 28 pour autoriser une libre dilatation thermique de la paroi 12 par rapport aux bras 30, et définissent avec les bords des échancrures une section de fuite de l'air du flux secondaire vers le flux primaire.

La partie radialement interne de chaque bras 30 qui s'étend dans le flux primaire 20 est en forme d'un dièdre creux dont l'arête est orientée vers l'amont, et à l'intérieur duquel s'étend une rampe d'éjection de carburant (non représentée) dont l'extrémité radialement externe est fixée au carter diffuseur 14 et reliée à des moyens d'alimentation en carburant. Le bras est fixé au carter 14 par l'intermédiaire de pattes latérales 32 qui s'étendent entre la paroi 12 et le carter 14 et entre lesquelles circule de l'air du flux secondaire 16, dont une partie peut s'engager dans le bras et être diffusé sur la rampe de carburant par des moyens de ventilation (non représentés).

Les pattes de fixation 32 comprennent à l'aval un logement de fixation d'un anneau brûleur 34 à section en C dont l'ouverture est orientée vers l'aval et qui renferme une rampe 36 d'éjection de carburant qui est raccordée aux moyens précités d'alimentation en carburant par des conduits coudés 38 passant axialement entre les pattes de fixation 32 des bras.

Une chemise cylindrique 39 est fixée par exemple par des rivets sur un canal cylindrique 15 de post-combustion fixé à l'extrémité aval du carter diffuseur 14, pour protéger thermiquement ce canal 15 de l'élévation de température provoquée par la combustion du mélange de gaz et de carburant injecté dans la chambre 10.

En fonctionnement, la pression du flux secondaire 16 est supérieure à celle du flux primaire 20, ce qui induit des efforts importants sur la partie d'extrémité aval de la paroi 12, et se traduit par des déformations locales de cette partie vers l'axe 25 du turboréacteur et par une augmentation de la section de fuite précitée, diminuant ainsi les performances du turboréacteur.

Dans la technique connue, on tente de limiter ces déformations au moyen de raidisseurs et d'un épaississement de la paroi. Dans l'exemple représenté en figure 2, la paroi 12 est épaisse, sa partie aval comprend des nervures axiales 40 de rigidification régulièrement réparties autour de l'axe, et les échancrures 28 comprennent des bords en saillie vers l'intérieur de la paroi.

Cependant, cette solution ne donne pas entière satisfaction, elle est complexe et coûteuse à réaliser et elle entraîne une augmentation de la masse de la paroi 12.

L'invention permet de résoudre le problème précité grâce à des moyens de support de l'extrémité aval de la paroi de séparation qui sont prévus sur des éléments structuraux de la chambre de post-combustion 10 et situés radialement à l'intérieur de la paroi.

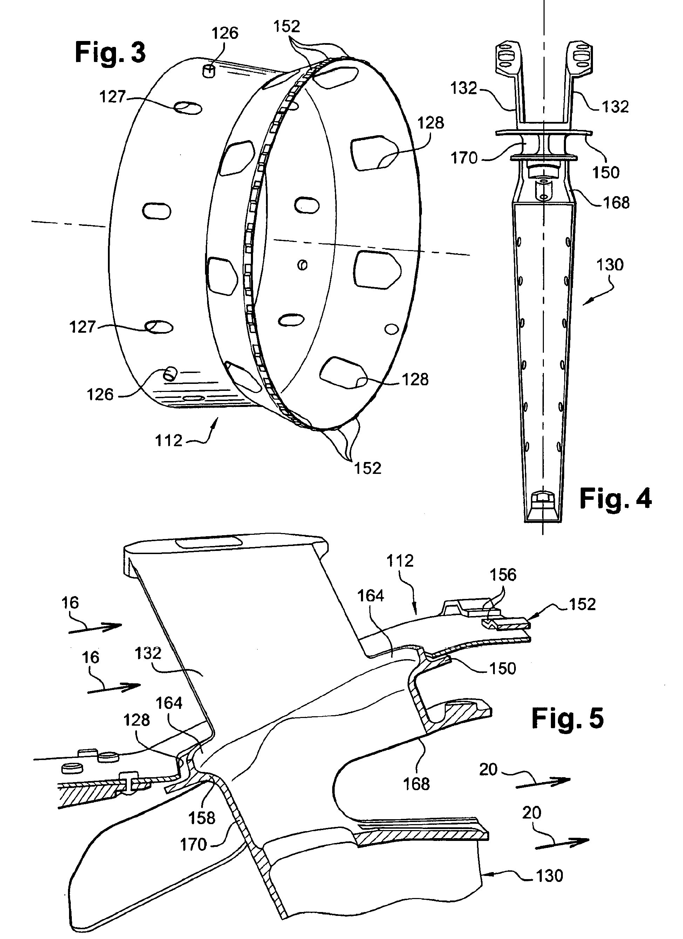

Dans le mode de réalisation de l'invention représenté aux figures 3 à 7, où les éléments des figures 1 et 2 sont désignés par les mêmes chiffres de référence augmentés d'une centaine, les bras accroche-flammes 130 de la chambre de post-combustion comprennent des collerettes externes 150 formant des moyens de support de l'extrémité aval de la paroi de séparation 112.

Cette paroi 112 a une forme sensiblement biconique, ses extrémités étant évasées vers l'extérieur (figure 3). Comme dans la technique antérieure, la partie d'extrémité amont de la paroi 112 comprend des cheminées radiales 126 de logement de broches cylindriques 24 pour la fixation de la paroi au carter diffuseur 14, et des orifices 127 de passage d'injecteurs de carburant.

La partie d'extrémité aval de la paroi 112 comporte des orifices 128 traversés par les bras accroche-flammes 130 et dont les bords sont en appui sur les collerettes externes 150 de ces bras.

La collerette externe 150 de chaque bras est formée au niveau de la base des pattes de fixation 132 et s'étend sur 360° autour de l'axe du bras à l'intérieur de la paroi 112 pour former une surface annulaire de support de la paroi 112.

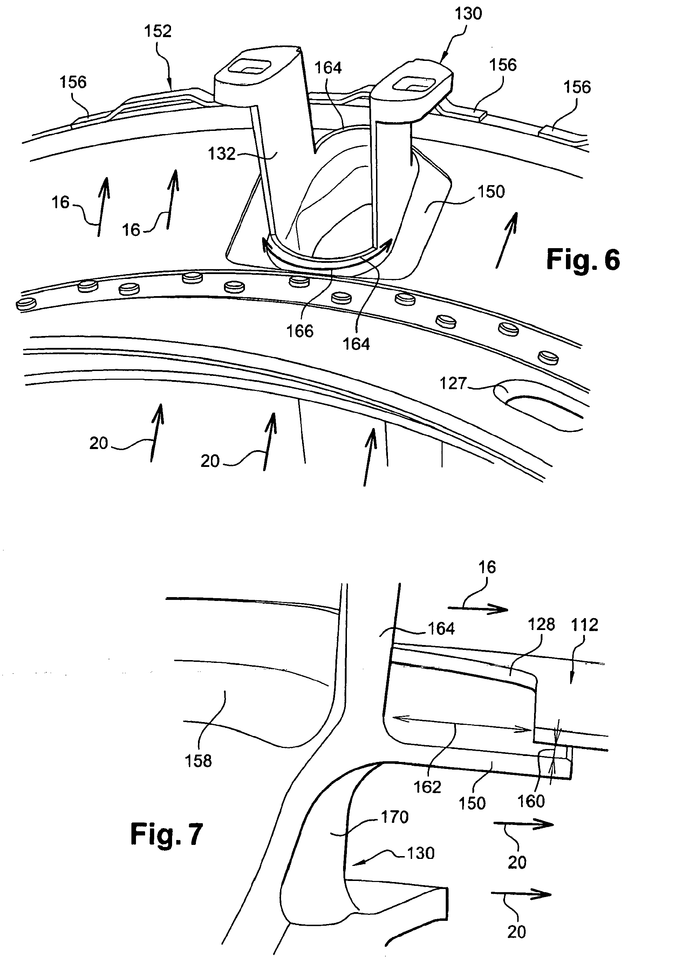

Dans l'exemple représenté, la collerette 150 est formée d'une seule pièce avec le bras 130 et est reliée au dièdre du bras par un arrondi 158 du côté intérieur (figure 6). La collerette a un contour sensiblement polygonal et ses dimensions sont supérieures à celles de l'orifice 128 correspondant de la paroi 112 pour que le bord de cet orifice soit supporté entièrement par la collerette. L'épaisseur de la collerette 150 est déterminée pour éviter qu'elle ne se déforme elle-même lorsque la paroi lui transmet les efforts de pression auxquels elle est soumise en fonctionnement, et a par exemple une épaisseur supérieure à celle de la paroi et sensiblement identique à celle des parois du dièdre.

La collerette est conformée pour s'étendre parallèlement à la paroi 112 et à une faible distance de celle-ci (figure 7), pour limiter la section de fuite 160 du flux secondaire vers le flux primaire et des gaz chaud du flux secondaire vers le flux primaire, cette section de fuite étant notablement inférieure à la section de fuite de la technique antérieure qui était délimitée par le bord de l'échancrure de la paroi et le bras, comme cela est schématiquement représenté par la flèche 162 en figure 7.

Un rebord cylindrique externe 164 est formé sur la collerette 150 du côté opposé à l'arrondi 158 et s'étend sensiblement coaxialement au bras et à l'intérieur de l'orifice 128 correspondant de la paroi 112. La distance radiale par rapport à l'axe du bras entre le rebord cylindrique 164 et le bord de l'orifice 128 est déterminée pour autoriser une libre dilatation thermique de la paroi par rapport au bras.

Dans l'exemple représenté, le rebord cylindrique 164 s'étend le long du bord amont et du bord aval de la collerette 150 et est raccordé aux pattes 132 de fixation du bras au carter diffuseur 14.

Ce rebord 164 a une hauteur ou une dimension axiale par rapport à l'axe du bras qui est déterminée pour que les gaz chauds qui pénètrent dans le flux secondaire en passant par la section de fuite précitée, entre le bord amont de la collerette 150 et la paroi 112, soient déviés par le rebord 164 et contournent le bras, comme cela est représenté par les flèches 166 en figure 6, évitant ainsi l'introduction de ces gaz chauds dans les moyens de ventilation précités, qui dégraderait le refroidissement des bras et de leur rampe d'éjection de carburant.

Le bras accroche-flammes 130 comporte, à l'aval du dièdre et à proximité de la collerette, un logement 168 de fixation d'un anneau brûleur 34 semblable à celui de la figure 1. La partie 170 du dièdre qui s'étend radialement entre le logement 168 et la collerette 150 a un profil aérodynamique pour ne pas gêner l'écoulement du flux primaire 20 entre l'anneau brûleur et la collerette et pour ne pas générer de décollement ou de recirculation de flux.

Dans l'exemple représenté, la paroi 112 a une dimension axiale supérieure à celle de la paroi 12 de la figure 2 et son extrémité amont s'étend à l'intérieur de la chemise cylindrique 39 de protection thermique du canal de post-combustion 15, et comprend des pontets 152 fixés à sa périphérie externe et régulièrement répartis autour de l'axe de la paroi, ces pontets 152 étant destinés à venir en appui radial sur la chemise 39 pour limiter les déformations de la paroi vers l'extérieur, tout en autorisant le passage du flux secondaire entre la paroi 112 et la chemise 39.

Les pontets 152 sont en forme de Ω ou de U inversé et sont fixés à leurs extrémités 156 par soudage ou brasage sur la paroi. Les pontets sont par exemple au nombre de 27. Le flux secondaire peut s'écouler à l'intérieur des pontets ou entre les pontets.

L'épaisseur de la paroi 112 est inférieure à celle de la paroi de la figure 2, et est par exemple comprise entre 1 et 2mm environ.

En fonctionnement, la paroi 112 se dilate radialement vers l'extérieur et n'est plus supportée ou est supportée localement par les collerettes des bras accroche-flammes. La différence de pression entre le flux primaire et le flux secondaire s'exerce sur l'extrémité aval de la paroi qui se déforme légèrement vers l'intérieur et vient en appui radial sur les collerettes des bras 130 pour limiter cette déformation. L'extrémité aval de la paroi peut venir également en appui radial sur la chemise 39 de protection thermique pour limiter également la déformation de la paroi vers l'extérieur. Les moyens de support et d'appui de l'extrémité aval de la paroi permettent ainsi d'améliorer le comportement dynamique de cette extrémité de la paroi 112.

Bien entendu, l'invention n'est pas limitée au mode de réalisation qui a été décrit dans ce qui précède et représenté dans les dessins annexés. Par exemple, la paroi 112 peut comprendre des échancrures traversées par les bras accroche-flammes de manière à ce que les collerettes des bras forment des moyens de support des bords des échancrures.

Il est également possible que la collerette soit rapportée et fixée sur le bras par toute technique appropriée. La collerette est par exemple réalisée en matériau composite à matrice céramique (CMC) et est fixée par des rivets ou des vis sur un bras accroche-flammes réalisé également en CMC.

La collerette peut également s'étendre le long d'une partie seulement du bord de l'orifice ou de l'échancrure de la paroi.

Il est également possible que le logement de fixation du secteur d'anneau du bras accroche-flammes 130 soit prévu sur les pattes de fixation du bras, comme c'est le cas dans la technique antérieure représenté en figure 1.

Dans un autre mode de réalisation non représenté, la chambre de post-combustion comprend une réchauffe annulaire formée par exemple par des anneaux accroche-flammes coaxiaux, et les moyens de support de l'extrémité aval de la paroi sont formés par des pontets fixés sur les bords de fuite d'un des anneaux accroche-flammes. Ces pontets peuvent être du même type que les pontets 152 fixés à l'extrémité aval de la paroi 112.

## Revendications

1. Chambre de post-combustion (10) d'un turboréacteur à double flux, comprenant une paroi sensiblement cylindrique (112) de séparation des flux primaire (20) et secondaire (16), des moyens de fixation de l'extrémité amont de cette paroi sur un carter externe (14), et des moyens (150) de support de l'extrémité aval de cette paroi, ces moyens de support étant prévus sur des bras accroche-flammes (130) s'étendant radialement par rapport à l'axe de la chambre, **caractérisée en ce que** la paroi de séparation (112) comprend des orifices (128) ou des échancrures traversés par les bras accroche-flammes (130) qui comportent chacun une collerette (150) sensiblement radiale qui s'étend à l'intérieur de la paroi de séparation et forme une surface de support du bord d'un orifice ou d'une échancrure correspondante de la paroi de séparation, un rebord cylindrique (164) sensiblement coaxial au bras (130) étant formé sur la collerette (150) et s'étendant radialement vers l'extérieur dans l'orifice (128) ou l'échancrure de la paroi de séparation et le long du bord de l'orifice ou de l'échancrure, et **en ce que** l'extrémité aval de la paroi de séparation (112) s'étend à l'intérieur d'une chemise cylindrique (39) de protection thermique et comprend des moyens d'appui radial sur cette chemise, ces moyens d'appui radial étant formés par des pontets (152) en forme de Ω ou de U inversé qui sont rapportés et fixés à leurs extrémités sur l'extrémité aval de la paroi de séparation, ces pontets étant régulièrement répartis autour de l'axe de la paroi de séparation et autorisant le passage du flux secondaire entre la paroi de séparation et la chemise.

2. Chambre selon la revendication 1, **caractérisée en ce que** le rebord cylindrique (164) formé sur la collerette (150) a une hauteur suffisante pour empêcher une introduction de gaz chauds du flux primaire (20) dans des moyens de ventilation du bras accroche-flammes (130).

3. Chambre selon la revendication 1 ou 2, **caractérisée en ce que** le
rebord cylindrique (164) s'étend le long du bord amont de la collerette (150) et d'au moins une partie du bord aval de la collerette.

4. Chambre selon l'une des revendications 1 à 3, **caractérisée en ce que** la collerette (150) est formée d'une seule pièce avec le bras accroche-flammes (130) ou est rapportée sur le bras accroche-flammes.

5. Chambre selon l'une des revendications 1 à 4, **caractérisée en ce que** le rebord cylindrique (164) est raccordé à des pattes latérales (132) de fixation du bras accroche-flammes (130) sur le carter (14).

6. Chambre selon l'une des revendications 1 à 5, **caractérisée en ce que** la partie du bras (130) qui s'étend radialement à l'intérieur de la collerette (150) a un profil aérodynamique pour garantir un écoulement de gaz sain et stable autour du bras.

7. Chambre selon la revendication 1, **caractérisée en ce qu'**elle comprend une réchauffe annulaire et **en ce que** la paroi de séparation est supportée par des pontets fixés sur les bords de fuite des anneaux accroche-flammes.

8. Turboréacteur à double flux, **caractérisé en ce qu'**il comprend une chambre de post-combustion (10) selon l'une des revendications précédentes.

## Patentansprüche

1. Nachverbrennungskammer (10) eines Zweistrom-Turbostrahltriebwerks, enthaltend eine im Wesentlichen zylindrische Trennwand (112) zum Abtrennen eines Primärstroms (20) und eines Sekundärstroms (16), Mittel zum Befestigen des stromaufwärtigen Endes dieser Wand an ein Außengehäuse (14), und Mittel (150) zum Tragen des stromabwärtigen Endes dieser Wand, wobei diese Tragmittel an Flammenfängerarmen (130) vorgesehen sind, die sich radial zur Achse der Kammer erstrecken, **dadurch gekennzeichnet, dass** die Trennwand (112) Öffnungen (128) bzw. Aussparungen aufweist, durch welche sich die Flammenfängerarme (130) erstrecken, die jeweils einen im Wesentlichen radial verlaufenden Kragen (150) aufweisen, der sich innerhalb der Trennwand erstreckt und eine Fläche zum Tragen der Randkante einer entsprechenden Öffnung bzw. Aussparung der Trennwand bildet, wobei eine im Wesentlichen koaxial zum Arm (130) verlaufende zylindrische Randleiste (164) an dem Kragen (150) ausgebildet ist und sich in der Öffnung (128) bzw. Aussparung der Trennwand radial nach außerhalb und entlang der Randkante der Öffnung bzw. Aussparung erstreckt, und dass das stromabwärtige Ende der Trennwand (112) sich innerhalb eines zylindrischen Mantels (39) zum Wärmeschutz erstreckt und Mittel zur radialen Abstützung an diesem Mantel aufweist, wobei diese radialen Abstützmittel von Überbrückungselementen (152) in umgekehrter Ω- oder U-Form gebildet werden, die mit ihren Enden an das stromabwärtige Ende der Trennwand angesetzt und daran befestigt sind, wobei diese Überbrückungselemente gleichmäßig um die Achse der Trennwand verteilt sind und den Durchtritt des Sekundärstroms zwischen Trennwand und Mantel gestatten.

2. Kammer nach Anspruch 1, **dadurch gekennzeichnet, dass** die an dem Kragen (150) ausgebildete zylindrische Randleiste (164) eine ausreichende Höhe aufweist, um ein Einströmen von heißen Gasen des Primärstroms (20) in Lüftungsmittel des Flammenfängerarms (130) zu verhindern.

3. Kammer nach Anspruch 1 oder 2, **dadurch gekennzeichnet, dass** die zylindrische Randleiste (164) sich entlang der stromaufwärtigen Randkante des Kragens (150) und zumindest eines Teils der stromabwärtigen Randkante des Kragens erstreckt.

4. Kammer nach einem der Ansprüche 1 bis 3, **dadurch gekennzeichnet, dass** der Kragen (150) in einem Stück mit dem Flammenfängerarm (130) ausgebildet ist oder an den Flammenfängerarm angesetzt ist.

5. Kammer nach einem der Ansprüche 1 bis 4, **dadurch gekennzeichnet, dass** die zylindrische Randleiste (164) mit seitlichen Laschen (132) zum Befestigen des Flammenfängerarms (130) an das Gehäuse (14) verbunden ist.

6. Kammer nach einem der Ansprüche 1 bis 5, **dadurch gekennzeichnet, dass** derjenige Teil des Arms (130), der sich radial innerhalb des Kragens (150) erstreckt, stromlinienförmig ausgebildet ist, um eine solide und stabile Gasströmung um den Arm herum zu gewährleisten.

7. Kammer nach Anspruch 1, **dadurch gekennzeichnet, dass** sie einen ringförmigen Nachverbrenner aufweist und dass die Trennwand von den Überbrückungselementen getragen wird, die an den Hinterkanten der Flammenfängerringe befestigt sind.

8. Zweistrom-Turbostrahltriebwerk, **dadurch gekennzeichnet, dass** es eine Nachverbrennungskammer (10) nach einem der vorangehenden Ansprüche aufweist.

## Claims

1. An afterburner (10) for a bypass turbojet engine, comprising a substantially cylindrical dividing wall (112) separating the main air stream (20) from the bypass air (16), means (150) of attaching the upstream end of this wall to an external casing (14), and means for supporting the downstream end of this wall, these support means being provided on flame holder arms (130) extending radially with respect to the axis of the afterburner, **characterized in that** the dividing wall (112) comprises orifices (128) or notches through which the flame holder arms (130) pass, each comprising a substantially radial flange (150) extending inside the dividing wall and forming a surface for supporting the edge of a corresponding orifice or notch in the dividing wall, a cylindrical rim (164) substantially coaxial with the arm (130) being formed on the flange (150) and extending radially outward in the orifice (128) or the notch in the dividing wall and along the edge of the orifice or of the notch, and **in that** the downstream end of the dividing wall (112) extends inside a thermal protection cylindrical sleeve (39) and comprises means for bearing radially against this sleeve, said radial support means being formed by small bridges (152) in the shape of an [Omega] of an inverted U which are provided and fixed at their ends to the downstream end of the dividing wall, said small bridges being regularly disposed about the axis of the dividing wall and allowing the bypass air to pass between the and the dividing wall and the sleeve.

2. The afterburner (10) as claimed in claim 1, **characterized in that** the cylindrical rim (164) formed on the flange (150) is tall enough to prevent hot gases from the main air stream (20) from entering means of ventilation of the flame holder arm (130).

3. The afterburner (10) as claimed in claim 1 or 2, **characterized in that** the cylindrical rim (164) extends along the upstream edge of the flange (150) and along at least part of the downstream edge of the flange.

4. The afterburner (10) as claimed in one of claims 1 to 3, **characterized in that** the flange (150) is formed as a single piece with the flame holder arm (130).or is attached to the flame holder arm.

5. The afterburner (10) as claimed in one of claims 1 to 4, **characterized in that** the cylindrical rim (164) is attached to lateral lugs (132) used for fixing the flame holder arm (130).to the casing (14).

6. The afterburner (10) as claimed in one of claims 1 to 5, **characterized in that** the part of the arm (130).that extends radially inside the flange (150) has an aerodynamic profile to guarantee that the gas flow around the arm is clean and stable.

7. The afterburner (10) as claimed in claim 1, **characterized in that** it comprises an annular afterburning, **characterized in that** the dividing wall is supported by small bridges attached to the trailing edges of the flame holder rings.

8. A bypass turbojet engine **characterized in that** it comprises an afterburner (10) as claimed in one of the preceding claims.
